# EUROPÄISCHE PATENTSCHRIFT

(11) **EP 2 100 040 B1**
(45) Veröffentlichungstag und Bekanntmachung des Hinweises auf die Patenterteilung: **03.04.2013**
(21) Anmeldenummer: 07822017.5
(22) Anmeldetag: 30.10.2007
(51) Int. Cl.: F04B 35/04, F16C 29/02, F16C 32/06

(54) **LINEARVERDICHTER UND GASDRUCKLAGER DAFÜR**
LINEAR COMPRESSOR AND GAS THRUST BEARING THEREFOR
COMPRESSEUR LINÉAIRE ET PALIER À GAZ SOUS PRESSION

(30) Priorität: 07.11.2006 DE 102006052447
(43) Veröffentlichungstag der Anmeldung: 16.09.2009
(73) Patentinhaber: BSH Bosch und Siemens Hausgeräte GmbH, 81739 München (DE)
(72) Erfinder: SCHUBERT, Jan-Grigor, 89250 Senden (DE)
(86) Internationale Anmeldenummer: PCT/EP2007/061663
(87) Internationale Veröffentlichungsnummer: WO 2008/055809

(56) Entgegenhaltungen:
- WO-A-2006/069883
- CH-A5- 695 112
- DE-U1- 8 132 123
- US-A- 4 506 935
- US-A- 4 802 774

## Beschreibung

Die vorliegende Erfindung betrifft ein Gasdrucklager und einen Linearverdichter, in dem das Gasdrucklager anwendbar ist.

Ein Gasdrucklager umfasst herkömmlicher Weise eine einen Hohlraum umgebende Lagerbuchse, in der ein Körper mit geringem Spiel beweglich gelagert ist, wobei die Lagerbuchse von einer Mehrzahl von Versorgungsbohrungen durchsetzt ist, die an einer Außenseite der Lagerbuchse mit Druckgas beaufschlagbar sind. Durch die Versorgungsbohrungen in den Hohlraum strömendes Gas bildet zwischen der Innenwand der Buchse und dem beweglichen Körper ein Gaspolster aus, durch das der Körper in dem Hohlraum berührungslos gehalten ist. Der Körper kann in der Lagerbuchse drehbeweglich oder in axialer Richtung verschiebbar sein.

Um den Körper ohne Berührung der Lagerbuchse gelagert zu erhalten, ist eine kontinuierliche Versorgung mit dem Druckgas erforderlich. Wenn jedoch ein Gerät, in dem das Gasdrucklager verwendet ist, außer Betrieb ist, ist es generell wünschenswert, die Druckgasversorgung unterbrechen zu können, damit keine unnötigen Betriebskosten entstehen. Wenn das Gerät selbst das Druckgas erzeugt, führt ein Ausschalten des Geräts zwangsläufig zu einer Unterbrechung der Druckgasversorgung. Bei ausgeschalteter oder unzureichender Druckgasversorgung kommt es jedoch zu Reibkontakt zwischen dem beweglichen Körper und der Lagerbuchse und damit zu Verschleiß, wenn der Körper bewegt wird. Um in einer solchen Situation den Verschleiß zu minimieren, ist es wünschenswert, ein funktionierendes Gaspolster mit möglichst geringer Verzögerung nach Einsetzen der Bewegung aufbauen zu können.

Ein Gasdrucklager der oben beschriebenen Art wirkt als eine Gasfeder, wobei bei gleichem Druck des zugeführten Druckgases die Kraft, die das Lager aufnehmen kann, ohne dass es zur Berührung des beweglichen Körpers und der Lagerbuchse kommt, bei kleinen Spaltbreiten in der Größenordnung von einigen Mikrometern bis wenigen zehn Mikrometern mit der Spaltbreite zunimmt. Dies bedeutet im Umkehrschluss, dass bei einer großen Breite des Spalts zwischen Lagerbuchse und beweglichem Körper bereits ein geringer Druck des zugeführten Druckgases ausreicht, damit das Gaspolster das Gewicht des beweglichen Körpers tragen und einen Kontakt des Körpers mit der Lagerbuchse aufheben kann. Dies spräche an sich dafür, das Spiel zwischen Lagerbuchse und Körper groß zu machen, um die Zeitverzögerung zu minimieren, mit der nach Starten der Druckgaszufuhr das Gasdrucklager seiner Wirkung entfaltet. Ein großer Spalt zwischen der Lagerbuchse und dem Körper fördert jedoch auch den Abfluss des das Polster bildenden Gases aus dem Spalt, das heißt der zum Aufrechterhalten der Lagerwirkung benötigte Gasdurchsatz nimmt mit der Spaltbreite zu, was wiederum zu erhöhten Betriebskosten führt.

Aus der WO 2006/069883 A ist ein Gasdrucklager mit einer einen Hohlraum umgebenden Lagerbuchse und einen in dem Hohlraum beweglichen Körper bekannt. Die Lagerbuchse weist eine Mehrzahl von Bohrungen auf, die an einer Außenseite der Lagerbuchse mit Druckgas beaufschlagbar sind, um in dem Innenraum ein Gaspolster zur Lagerung des beweglichen Körpers zu bilden.

Ziel der vorliegenden Erfindung ist daher, ein Gasdrucklager anzugeben, das einerseits bereits mit einem niedrigen Druck des zugeführten Gases ein wirksames Gaspolster aufzubauen in der Lage ist, und das andererseits einen Dauerbetrieb bei niedrigem Gasdurchsatz ermöglicht.

Diese Ziel wird dadurch erreicht, dass bei einem Gasdrucklager der eingangs genannten Art der Körper und die Lagerbuchse aus Werkstoffen mit unterschiedlichen thermischen Ausdehnungskoeffizienten gefertigt sind. Während bei einer typischen Nichtbetriebstemperatur des Gasdrucklagers eine große Spaltbreite zwischen Lagerbuchse und beweglichem Körper vorliegen kann, der es bereits bei niedrigem Gasdruck ermöglicht, den Körper berührungslos zu halten, kann durch Steuern der Temperatur des Gasdrucklagers während des Betriebs der Spalt verengt werden, um einen Betrieb bei niedrigem Gasdurchsatz zu ermöglichen.

Um die Spaltbreite in dieser Weise zu steuern, ist vorzugsweise eine Einrichtung zum Temperieren der Lagerbuchse und/oder des beweglichen Körpers als eine Komponente des Gasdrucklagers vorgesehen.

Eine solche Einrichtung zum Temperieren kann von unterschiedlichster Art sein; zum Beispiel kann die Lagerbuchse mit einer elektrischen Widerstandsheizung versehen sein, oder es können Mittel zum Induzieren von Wirbelströmen in dem beweglichen Körper, gegebenenfalls unter Ausnutzung von dessen Bewegung, vorgesehen sein.

Eine vorteilhafte, indirekte Möglichkeit der Temperierung ist, eine Einrichtung zum Temperieren des die Versorgungsbohrungen beaufschlagenden Druckgases vorzusehen.

Einer bevorzugten Ausgestaltung zufolge ist die Einrichtung zum Temperieren ein Verdichter, der eine adiabatische Erwärmung des Druckgases bei der Verdichtung bewirkt.

Insbesondere kann der Hohlraum der Lagerbuchse eine Arbeitskammer und der bewegliche Körper ein Kolben dieses Verdichters sein.

Der Gasdurchsatz des Verdichters kann ein Vielfaches des Durchsatzes der Versorgungsbohrungen sein; d.h. nur ein kleiner Teil des Druckgases wird zur Aufrechterhaltung des Gaspolsters benötigt, während der überwiegende Rest für andere Verwendungen zur Verfügung steht.

Wenn die Temperatur des Gasdrucklagers im Betrieb höher ist als im Nichtbetriebszustand, sollte der Kolben, um im Betrieb den Spalt zu verengen, einen höheren thermischen Ausdehnungskoeffizienten haben als die Lagerbuchse.

Der bewegliche Körper ist aus Edelstahl und die Lagerbuchse aus Werkzeugstahl gefertigt.

Weitere Merkmale und Vorteile der Erfindung ergeben sich aus der Beschreibung von Ausführungsbeispielen unter Bezugnahme auf die beigefügten Figuren. Es zeigen:
- Fig. 1: einen schematischen Schnitt durch einen Verdichter mit einem Gasdrucklager gemäß der vorliegenden Erfindung; und
- Fig. 2: eine schematische Darstellung eines Antriebsaggregats für den Verdichter

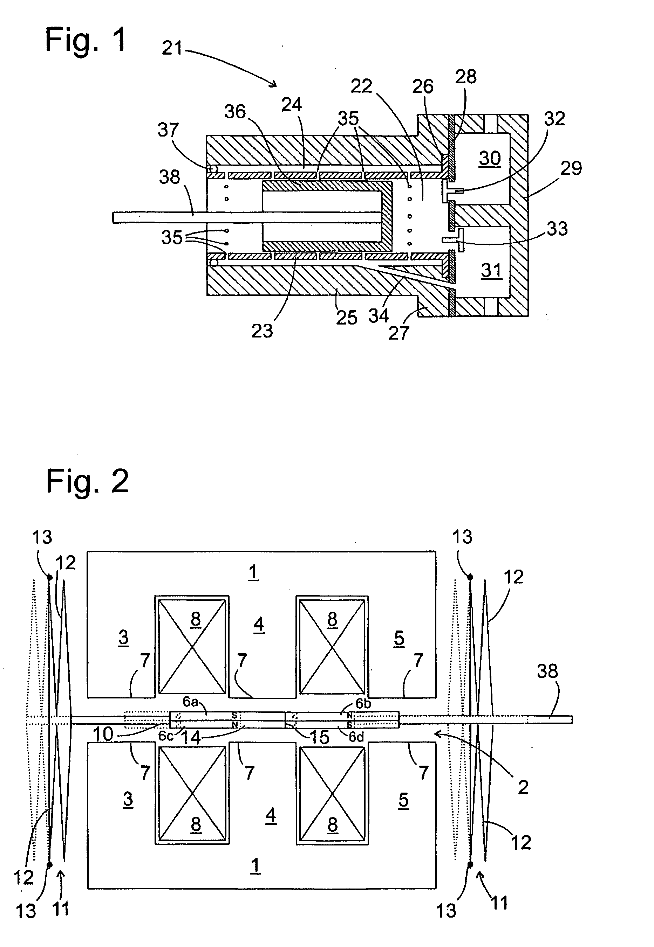

Der in Fig. 1 gezeigte Verdichter hat ein Gehäuse 21 mit einer hohlzylindrischen, eine Arbeitskammer 22 begrenzenden Lagerbuchse 23. Die Lagerbuchse 23 ist umgeben von einem umlaufenden Hohlraum 24, und dieser wiederum ist begrenzt durch ein im wesentlichen rohrförmiges Gehäuseteil 25. Die Lagerbuchse 23 und das Gehäuseteil 25 tragen jeweils an einem Ende einen ringförmig umlaufenden Flansch 26 bzw. 27, wobei der Flansch 26 der Lagerbuchse 23 in eine einerseits durch das Gehäuseteil 25 und andererseits durch ein Federblech 28 begrenzte Aussparung eingreift, wodurch die Lagerbuchse 23 an dem Gehäuseteil 25 und dem Federblech 28 fixiert ist, und der Flansch 27 des Gehäuseteils 25 in beliebiger geeigneter Weise fest und hermetisch dicht mit dem Federblech 28 verbunden ist. An einem von den Flanschen 27, 28 abgewandten Ende ist der Hohlraum 24 durch einen zwischen Lagerbuchse 23 und Gehäuseteil 25 eingeklemmten O-Ring 37 abgedichtet.

Eine an der dem Gehäuseteil 25 entgegengesetzten Seite des Federblechs 28 befestigte Kappe 29 begrenzt zwei Kammern 30, 31, die mit der Arbeitskammer 22 über in der Fig. schematisch dargestellte, vorzugsweise einteilig aus dem Federblech 28 geformte Ventile 32, 33 kommunizieren. Die Ventile 32, 33 sind Rückschlagventile, die einen Gasstrom jeweils nur von der oberen, saugseitigen Kammer 30 in die Arbeitskammer 22 bzw. von der Arbeitskammer 22 in die untere, druckseitige Kammer 31 zulassen. Eine Bohrung 34 verbindet die druckseitige Kammer 31 mit dem die Lagerbuchse 23 umgebenden Hohlraum 24.

Über eine Vielzahl von sich durch die Lagerbuchse 23 erstreckenden Bohrungen 35 kann Druckgas aus dem Hohlraum 24 in die Arbeitskammer 22 gelangen und dort ein Gaspolster zwischen der Innenseite der Lagerbuchse 23 und einem in der Lagerbuchse 23 verschiebbaren Kolben 36 ausbilden. Der Kolben 36 ist mit dem in Fig. 2 gezeigten Antriebsaggregat über eine Kolbenstange 38 verbunden und zu einer oszillierenden Bewegung antreibbar.

Der Kolben 36 ist aus Edelstahl gefertigt. Ein typischer Wärmeausdehnungskoeffizient eines Edelstahls ist 16x10⁻⁶ K⁻¹. Die Lagerbuchse 23 hingegen besteht aus Werkzeugstahl und hat einen thermischen Ausdehnungskoeffizienten von 13 x10⁻⁶ K⁻¹. Beide Teile können mit härtenden und/oder reibungsverringernden Oberflächenbeschichtungen versehen sein.

Einer bevorzugten Anwendung zufolge kann der in Fig. 1 gezeigte Verdichter zum Verdichten von Kältemittel in einem Haushaltskältegerät eingesetzt werden. In diesem Fall nimmt der Verdichter in einem Nichtbetriebszustand im wesentlichen Raumtemperatur an. Der Außendurchmesser des Kolbens 36 und der Innendurchmesser der Lagerbuchse 23 betragen ca. 30 Millimeter, wobei der Durchmesser des Kolbens bei Zimmertemperatur ca. 14 Mikrometer kleiner als der der Buchse 23 gemacht ist, so dass, wenn der Kolben 36 exakt zentriert ist, ein umlaufender Spalt von 7 Mikrometer Breite ihn von der Lagerbuchse 23 trennt.

Wenn der Verdichter in Betrieb genommen wird und das Antriebsaggregat beginnt, den Kolben 36 zu bewegen, besteht zunächst kein Druckunterschied zwischen der Arbeitskammer 22 und dem Hohlraum 24. Es wird kein Gaskissen erzeugt, und der Kolben 36 bewegt sich in Kontakt mit der Lagerbuchse 23. Erst durch die oszillierende Bewegung des Kolbens 36 entsteht ein Überdruck in der Kammer 31, und ein Teil des in der Arbeitskammer 22 verdichteten und in die druckseitige Kammer 31 ausgestoßenen gasförmigen Kältemittels fließt in den Hohlraum 24 zurück und beaufschlagt dort die Bohrungen 35. Sobald in dem Hohlraum 24 ein ausreichender Überdruck erzeugt ist, wird das Gaskissen wirksam und verhindert ein weiteres Schleifen des Kolbens 36 an der Lagerbuchse 23.

Durch die Verdichtung in der Arbeitskammer 22 erwärmt sich das verdichtete Kältemittel, und durch den Rückfluss des warmen Kältemittels in den Hohlraum 24 erwärmen sich im Laufe des Betriebs auch die Lagerbuchse 23 und der Kolben 36. Die Erwärmung kann typischerweise ca. 50 K betragen. Eine solche Erwärmung reduziert die Breite des Spalts zwischen dem Kolben 36 und der Lagerbuchse 23 von 7 Mikrometer beim Start des Verdichters auf ca. 4, 75 Mikrometer im kontinuierlichen Betrieb. Aufgrund der Spaltverengung ist der Gasdurchsatz durch die Bohrungen 35 im warmen Zustand gegenüber der Anlaufphase erheblich verringert.

In der Startphase hat also der Verdichter einen relativ niedrigen Wirkungsgrad, weil ein relativ großer Teil des Kältemittels zur Aufrechterhaltung des Gaskissens abgezweigt wird. Gleichzeitig genügt aber in der Startphase bereits ein relativ niedriger Überdruck des Kältemittels, um den Kolben 36 berührungslos in der Lagerbuchse 23 zu halten. Im Dauerbetrieb steht ausreichend Druck des verdichteten Kältemittels zur Verfügung, um Berührungsfreiheit auch bei einer verringerten Spaltbreite zu gewährleisten. Indem durch Erwärmung die Spaltbreite verringert wird, kann in dieser Situation die zur Aufrechterhaltung des Gaskissens erforderliche Kältemittelmenge reduziert werden, was den Wirkungsgrad des Verdichters erhöht.

Fig. 2 zeigt schematisch das Antriebsaggregat, das die oszillierende Bewegung des Kolbens 36 antreibt. Es umfasst zwei E-förmige Joche 1 mit drei sich paarweise gegenüberliegenden Armen 3, 4, 5. Die einander zugewandten Enden der Arme 3, 4, 5 bilden jeweils einen Luftspalt 2 begrenzende Polschuhe 7. Um die mittleren Arme 4 herum ist jeweils eine Erregerwicklung 8 angebracht. Die zwei Erregerwicklungen 8 sind durch eine Steuerschaltung mit Strom beaufschlagbar, wobei die Stromrichtung in den beiden Erregerwicklungen 8 jeweils so festgelegt ist, dass die einander gegenüberliegenden Polschuhe 7 der mittleren Arme 4 ungleichnamige Magnetpole bilden. Die Polschuhe der äußeren Arme 3 und 5 bilden jeweils zum benachbarten mittleren Arm 4 ungleichnamige Magnetpole.

In dem Luftspalt 2 ist ein Anker 10 an zwei Federn 11 zwischen einem oberen und einem unteren (beziehungsweise einem rechten und linken Umkehrpunkt in der Darstellung der Fig. 2) Umkehrpunkt reversierend beweglich aufgehängt. Die Stellung des Ankers 10 am oberen Umkehrpunkt ist mit durchgezogenen Linien, die am unteren Umkehrpunkt gestrichelt dargestellt. Die Federn 11 sind jeweils aus einem Blechstück ausgestanzte Blattfedern mit mehreren zickzackförmig verlaufenden Armen 12. Die Arme 12 einer Feder 11 erstrecken sich jeweils spiegelbildlich zueinander von einem zentralen Angriffspunkt an dem Anker 10 zu Aufhängungspunkten 13 an einem nicht dargestellten starren Gestell, an dem auch die Joche 1 und der Verdichter verankert sind. Durch diese Gestaltung sind die Federn 11 in Längsrichtung des Ankers 10 und in jeder dazu orthogonalen Richtung schwer verformbar, so dass sie den Anker 10 in seiner Längsrichtung reversierbar führen.

Der im wesentlichen stabförmige Anker 10 umfasst in seinem mittleren Bereich einen vierpoligen Permanentmagneten 14. Während in einer entspannten Stellung der Federn 11, in der die Arme 12 jeder Feder 11 im wesentlichen in einer gleichen Ebene liegen, der Magnet 14 zentral in dem Luftspalt 2 platziert ist und eine Grenzlinie 15 zwischen seinen in Fig. 1 linken und rechten Polen mittig durch die mittleren Arme 4 verläuft, wird durch Beaufschlagen der Wicklungen 8 mit einem Strom der Anker 10 je nach Stromrichtung nach links oder nach rechts ausgelenkt.

Das oben erläuterte Ausführungsbeispiel nutzt zur Erwärmung des Kolbens 36 im Betrieb die mit dem Verdichterbetrieb verbundene adiabatische Erwärmung des Kältemittels. Selbstverständlich kann eine die Spaltbreite zwischen Kolben und Lagerbuchse verändernde Temperaturänderung zwischen einem Betriebs- und einem Nichtbetriebszustand auch durch direktes Heizen (oder Kühlen) des Kolbens und der Lagerbuchse bewerkstelligt werden.

## Patentansprüche

1. Gasdrucklager mit einer einen Hohlraum (22) umgebenden Lagerbuchse (23) und einem in dem Hohlraum (22) beweglichen Körper (36), wobei die Lagerbuchse (23) von einer Mehrzahl von Versorgungsbohrungen (35) durchsetzt ist, die an einer Außenseite (24) der Lagerbuchse (23) mit Druckgas beaufschlagbar sind, um in dem Innenraum (22) ein Gaspolster zur Lagerung des beweglichen Körpers (36) zu bilden, **dadurch gekennzeichnet, dass** der Körper (36) und die Lagerbuchse (23) aus Werkstoffen mit unterschiedlichen thermischen Ausdehnungskoeffizienten gefertigt sind, wobei der bewegliche Körper (36) aus Edelstahl und die Lagerbuchse (23) aus Werkzeugstahl gefertigt ist.

2. Gasdrucklager nach Anspruch 1, **gekennzeichnet durch** eine Einrichtung zum Temperieren der Lagerbuchse und/oder des beweglichen Körpers (36).

3. Gasdrucklager nach Anspruch 1, **gekennzeichnet durch** eine Einrichtung zum Temperieren des die Versorgungsbohrungen (35) beaufschlagenden Druckgases.

4. Gasdrucklager nach einem der vorhergehenden Ansprüche, **dadurch gekennzeichnet, dass** die Einrichtung zum Temperieren ein Verdichter ist.

5. Gasdrucklager nach einem der vorhergehenden Ansprüche, **dadurch gekennzeichnet, dass** der Hohlraum (22) eine Arbeitskammer (22) und der bewegliche Körper (36) ein Kolben (36) des Verdichters ist.

6. Gasdrucklager nach Anspruch 5, **dadurch gekennzeichnet, dass** der Gasdurchsatz des Verdichters ein Vielfaches des Durchsatzes der Versorgungsbohrungen (35) ist.

7. Gasdrucklager nach einem der vorhergehenden Ansprüche, **dadurch gekennzeichnet, dass** der Kolben (36) einen höheren thermischen Ausdehnungskoeffizienten hat als die Lagerbuchse (23).

## Claims

1. Gas thrust bearing with a bearing bush (23) surrounding a cavity (22) and a body (36) able to be moved in the cavity (22), with the bearing bush (23) having a plurality of supply holes (35) passing through it to which compressed gas is able to be applied on an outer side (24) of the bearing bush (23), in order to form a gas cushion in the inner chamber (22) to support the movable body (36), **characterised in that** the body (36) and the bearing bush (23) are made of materials with different coefficients of thermal expansion, wherein the movable body (36) is made of stainless steel and the bearing bush (23) of tool steel.

2. Gas thrust bearing according to claim 1, **characterised by** a device for tempering the bearing bush and/or the movable body (36).

3. Gas thrust bearing according to claim 1, **characterised by** a device for tempering the compressed gas applied to the supply holes (35).

4. Gas thrust bearing according to one of the previous claims, **characterised in that** the device for tempering is a compressor.

5. Gas thrust bearing according to one of the previous claims, **characterised in that** the cavity (22) is a working chamber (22) and the movable body (36) is a piston (36) of the compressor.

6. Gas thrust bearing according to claim 5, **characterized in that** the gas throughput of the compressor is a multiple of the throughput of the supply holes (35).

7. Gas thrust bearing according to one of the previous claims, **characterised in that** the piston (36) has a higher coefficient of thermal expansion than the bearing bush (23).

## Revendications

1. Palier à pression de gaz comprenant une douille de palier (23) entourant un espace creux (22) et un corps (36) mobile dans l'espace creux (22), la douille de palier (23) étant traversée par une pluralité de trous d'alimentation (35) pouvant être mis sous pression de gaz sur un côté extérieur (24) de la douille de palier (23) afin de former dans l'espace creux (22) un coussin de gaz pour loger le corps mobile (36), **caractérisé en ce que** le corps (36) et la douille de palier (23) sont fabriqués dans des matériaux ayant différents coefficients d'expansion thermique, le corps mobile (36) étant fabriqué en acier inoxydable et la douille de palier (23) étant fabriquée en acier à outils.

2. Palier à pression de gaz selon la revendication 1, **caractérisé par** un dispositif destiné à tempérer la douille de palier et/ou le corps mobile (36).

3. Palier à pression de gaz selon la revendication 1, **caractérisé par** un dispositif destiné à tempérer le gaz de pression alimentant les trous d'alimentation (35).

4. Palier à pression de gaz selon l'une quelconque des revendications précédentes, **caractérisé en ce que** le dispositif destiné à tempérer est un compresseur.

5. Palier à pression de gaz selon l'une quelconque des revendications précédentes, **caractérisé en ce que** l'espace creux (22) est une chambre de travail (22) et **en ce que** le corps mobile (36) est un piston (36) du compresseur.

6. Palier à pression de gaz selon la revendication 5, **caractérisé en ce que** le débit de gaz du compresseur est un multiple du débit des trous d'alimentation (35).

7. Palier à pression de gaz selon l'une quelconque des revendications précédentes, **caractérisé en ce que** le piston (36) a un coefficient d'expansion thermique plus élevé que la douille de palier (23).
